# EUROPÄISCHE PATENTSCHRIFT

(11) **EP 2 048 382 B1**
(45) Veröffentlichungstag und Bekanntmachung des Hinweises auf die Patenterteilung: **31.08.2011**
(21) Anmeldenummer: 08105408.2
(22) Anmeldetag: 23.09.2008
(51) Int. Cl.: F16B 25/00

(54) **Befestigungselement**
Fastening element
Elément de fixation

(30) Priorität: 08.10.2007 DE 102007000828
(43) Veröffentlichungstag der Anmeldung: 15.04.2009
(73) Patentinhaber: HILTI Aktiengesellschaft, 9494 Schaan (LI)
(72) Erfinder: Oberndorfer, Georg, 6800, Feldkirch (AT); Splitt, Michael, 9493 Mauren (LI); Schäffer, Marc, 6800, Feldkirch-Nofels (AT); Oppeneiger, Simon, 6973, Hoechst (AT); Gebhard, Jürgen, 9450, Altstätten (CH)
(74) Vertreter: Wildi, Roland

(56) Entgegenhaltungen:
- EP-A1- 1 557 576
- DE-A1- 19 801 105
- DE-U1- 9 103 773

## Beschreibung

Die Erfindung betrifft ein Befestigungselement mit einem Drehangriffsmittel für ein Setzwerkzeug und mit einem ein furchendes Gewinde tragenden Schaft, der ein dem Drehangriffsmittel abgewandtes freies Ende aufweist, wobei das Gewinde zumindest einen Gewindegang mit einem Gewindeanfang im Bereich des freien Endes aufweist, wobei zumindest der sich an den Gewindeanfang anschliessende Abschnitt des zumindest einen Gewindeganges mit Gewindestufen unterschiedlichen Querschnitts versehen ist, die wenigstens teilweise in Richtung des Gewindeanfangs ausgerichtete und als Schneiden ausgebildete Stirnflächen aufweisen, und wobei der zumindest eine Gewindegang zum Gewindeanfang hin stufenweise stetig von Gewindestufe zu Gewindestufe im Querschnitt kleiner wird.

Derartige Befestigungselemente, wie z. B. Betonschrauben oder Innengewindehülsen, werden in zuvor in einen Untergrund erstellte Bohrlöcher mit einem Setzwerkzeug, wie beispielsweise einem Tangentialschlagschrauber, z. B. eingeschraubt, wobei deren furchendes Gewinde zur Verankerung des Befestigungselementes dabei im Untergrund ein Gegengewinde in die Bohrlochwandung furcht.

Mineralische Untergründe, wie Beton oder Mauerwerk, in denen gattungsgemässe Befestigungselemente hauptsächlich gesetzt werden, sind spröde Materialien. Beim Furchen des Gegengewindes treten im Untergrund Materialabplatzungen auf, welche das geschaffene Gegengewinde bereichsweise über das erforderliche Mass vergrössern. Aufgrund dieser bereichsweisen Vergrösserungen sind die von dem Befestigungselement im gesetzten Zustand übertragbaren Lasten reduziert.

Die beim Setzvorgang am Befestigungselement sowie im Untergrund auftretenden Verformungen führen ausserdem dazu, dass ein hohes Eindrehmoment und somit ein entsprechend ausgebildetes Setzwerkzeug erforderlich ist.

Aus der DE 101 13 946 A1 ist eine Betonschraube als Befestigungselement mit einem Drehangriffsmittel für ein Setzwerkzeug und mit einem ein furchendes Gewinde tragenden Schaft bekannt, der ein dem Drehangriffsmittel abgewandtes freies Ende aufweist. Das furchende Gewinde weist einen Gewindegang auf, der im Bereich des freien Endes mit sich vom Gewindeaussendurchmesser erstreckenden Schneidkerben versehen ist.

Nachteilig an der bekannten Lösung ist, dass das Gegengewinde im Untergrund durch Zermahlen und nicht durch ein Schneiden erzeugt wird. Somit können bei der Ausbildung des Gegengewindes weiterhin Materialabplatzungen auftreten, wodurch in dem vorgeschädigten Bereich der erstellten Hinterschneidung die Lastübertragung weiterhin stark beschränkt ist.

Aus der DE 91 03 773 U ist eine Selbstbohrschraube als Befestigungselement mit einem Drehangriffsmittel für ein Setzwerkzeug und mit einem ein furchendes Gewinde tragenden Schaft bekannt, der ein dem Drehangriffsmittel abgewandtes freies Ende aufweist. Das Gewinde weist einen Gewindegang mit einem Gewindeanfang im Bereich des freien Endes auf. Ausgehend von dem Gewindeanfang ist der Gewindegang mit Gewindestufen unterschiedlichen Querschnitts versehen. Die Gewindestufen weisen jeweils einen grösseren und einen kleineren Querschnitt auf, wobei jeweils eine Gewindestufe mit einem grösseren Querschnitt hinter einer Gewindestufe mit einem kleineren Querschnitt angeordnet ist und die Anordnung sich entlang des Gewindeganges alternierend fortsetzt. Die Gewindestufen mit dem grösseren Querschnitt weisen in Richtung des Gewindeanfangs ausgerichtete und als Schneiden ausgebildete Stimflächen auf.

Nachteilig an der bekannten Lösung ist, dass auch bei dem Gewindegang mit alternierend angeordneten Gewindestufen weiterhin Materialabplatzungen beim Setzvorgang des Befestigungselementes auftreten können.

Die DE 198 01 105 A1 lehrt eine gewindeschneidende Schraube, bei der das Gewinde im Bereich des Einführendes der Schraube mit zum Aussenumfang hin offen ausgebildeten Schneidkerben versehen ist.

Aufgabe der Erfindung ist es, ein Befestigungselement mit einem gewindefurchenden Gewinde zu schaffen, das in mineralischen Untergründen ein Gegengewinde mit im Wesentlichen nahezu idealer Ausgestaltung erzeugt.

Die Aufgabe ist durch die Merkmale des unabhängigen Anspruchs gelöst. Vorteilhafte Weiterbildungen sind in den Unteransprüchen dargelegt.

Gemäss der Erfindung ist der sich an den Gewindeanfang anschliessende Abschnitt des zumindest einen Gewindeganges im Wesentlichen treppenförmig ausgestaltet, wobei der zumindest eine Gewindegang zum Gewindeanfang hin stufenweise stetig von Gewindestufe zu Gewindestufe in der Gewindehöhe abnimmt.

Zum Gewindeanfang hin nimmt der Querschnitt des zumindest einen Gewindeganges vorteilhaft jeweils sprunghaft ab. Die Ausgestaltung des zumindest sich an den Gewindeanfang anschliessenden Abschnitts des zumindest einen Gewindeganges ist im Wesentlichen treppenförmig. Dabei muss die bezogen auf den Gewindeanfang erste Stirnfläche der ersten Gewindestufe nicht zwingend bei dem Gewindeanfang liegen. Beispielsweise ist diese erste Stirnfläche beabstandet zum Gewindeanfang angeordnet, so dass vom Gewindeanfang bis zu dieser Stirnfläche der Gewindegang einen herkömmlichen Gewindeauslauf aufweist.

Zu Beginn des gewindefurchenden Vorgangs kommt die freie Stirnfläche der in Bezug auf die Eindrehrichtung des Befestigungselementes ersten Gewindestufe an dem sich an den Gewindeanfang anschliessenden Abschnitt des zumindest einen Gewindeganges mit dem Untergrund in Eingriff. Diese erste Gewindestufe weist den kleinsten Querschnitt auf. Mit der eine weitere Schneide bildenden Stirnfläche der benachbarten beziehungsweise nächsten Gewindestufe wird das zuvor erstellte Gegengewinde weiter vertieft, wobei die weiteren nachfolgenden Stirnflächen der nachfolgenden Gewindestufen diesen Vorgang fortsetzen, bis das erzeugte Gegengewinde für einen einwandfreien Hinterschnitt des Gewindes des Befestigungselementes ausgebildet ist. Durch die Gewindestufen zumindest an dem sich an den Gewindeanfang anschliessenden Abschnitt des zumindest einen Gewindeganges wird ein präziser Gewindehinterschnitt ohne grosse Materialabplatzungen und im Wesentlichen ohne Vorschädigung des Untergrundes in dem das Gegengewinde umgebenden Bereich erzeugt. Zudem treten an den einzelnen Schneiden geringere Flächenpressungen auf.

Erfindungsgemäss nimmt der zumindest eine Gewindegang zum Gewindeanfang hin stufenweise stetig von Gewindestufe zu Gewindestufe in der Gewindehöhe ab. Die Gewindestufen vertiefen ausgehend von dem Gewindeanfang beim Eindrehen des Befestigungselementes das von der zuvor mit dem Untergrund in Eingriff stehenden Gewindestufe erstellte Gegengewinde fortlaufend in radialer Richtung bis auf das für das Gewinde des Befestigungselementes optimale Mass.

Unter Gewindehöhe wird die Höhe der Gewinderücken zum Gewindegrund verstanden. Der Gewindegrund entspricht üblicherweise der Umfangsfläche des Kerndurchmessers des Schafts und verläuft in radialer Richtung um die Längsachse des Schaftes beziehungsweise des Befestigungselementes.

Bevorzugt nimmt der zumindest eine Gewindegang zum Gewindeanfang hin stufenweise stetig von Gewindestufe zu Gewindestufe in der Gewindebreite am Gewindegrund ab, so dass die Stirnfläche beim Übergang zwischen zwei Gewindestufen seitlich und vorteilhaft in beide Richtungen quer zum Gewindeverlauf die Gewindestufe mit dem kleineren Querschnitt überragt. Die Stirnfläche und somit die dadurch geschaffene Schneide weist eine grössere Wirkungsfläche für einen vorteilhaften Materialabtrag insbesondere in spröden Materialen auf. Das Gegengewinde wird beim Eindrehen des Befestigungsrnittels dabei in einer parallel zur Längsachse verlaufenden Ebene fortlaufend bis auf das für das Gewinde des Befestigungselementes optimale Mass vergrössert. Vorteilhaft ist die Gewindebreite am Gewindegrund einer Gewindestufe konstant. In einer alternativen Ausführungsform kann die Gewindebreite am Gewindegrund über die Erstreckung der Gewinderücken in Richtung des Gewindeverlaufs variieren, wobei die Gewindebreite eines Gewinderückens in einer solchen Ausführungsform vorteilhaft zum Gewindeanfang hin entlang des Gewindeverlaufs abnimmt. Weiter kann die Gewindebreite am Gewindegrund eines Gewinderückens bereichsweise zunehmen oder abnehmen, wobei diese auch einen taillierten Abschnitt entlang ihrer Erstreckung in Richtung des Gewindeverlaufs aufweisen kann.

In einer vorteilhaften Ausführungsform nimmt der zumindest eine Gewindegang zum Gewindeanfang hin stetig von Gewindestufe zu Gewindestufe in der Gewindehöhe und in der Gewindebreite am Gewindegrund ab. Der Querschnitt des Gewindeganges zum Gewindeanfang hin wird vorteilhaft von Gewindestufe zu Gewindestufe sprunghaft kleiner.

Vorzugsweise weist die Gewindestufe eine konstante Gewindehöhe zum Gewindegrund auf. Zumindest der sich an den Gewindeanfang anschliessende Abschnitt des zumindest einen Gewindeganges weist in dieser Ausführungsform in einer parallel zu einer von dem Gewindegrund aufgespannten Ebene verlaufenden Ebene eine treppenartige Ausgestaltung auf, wobei der Materialabtrag im Untergrund beim Erzeugen des Gegengewindes abgestuft erfolgt. Der Gewinderücken beziehungsweise die radial aussen liegende Kante des Gewindeganges verläuft parallel zu einer von dem Gewindegrund aufgespannten Ebene.

In einer weiteren vorteilhaften Variante der Erfindung weist die Gewindestufe eine variierende Höhe zum Gewindegrund auf, wobei die Gewindehöhe des Gewindeganges vorteilhaft zum Gewindeanfang hin abnehmend ausgebildet ist. Der Gewinderücken beziehungsweise die radial aussen liegende Kante des Gewindeganges ist in einem Winkel zu einer von dem Gewindegrund aufgespannten Ebene geneigt. Nach einer der Stirnflächen der Gewindestufen dringt die dazu benachbarte Gewindestufe kontinuierlich in den Untergrund ein, bis die nächste Stirnfläche der zu dieser Gewindestufe benachbarten Gewindestufe die Bearbeitungstiefe im Untergrund wieder, vorteilhaft sprunghaft, erhöht.

Vorteilhaft sind bei einem Befestigungselement jeweils die Gewinderücken beziehungsweise die radial aussen liegenden Kanten des Gewindeganges bei jeder Gewindestufe entweder parallel oder geneigt zu der von dem Gewindegrund aufgespannten Ebene ausgerichtet. In einer alternativen Ausführungsform können an einem Befestigungselement auch verschiedene Ausrichtungen der Gewinderücken, d. h. parallel und geneigt zu der von dem Gewindegrund aufgespannten Ebene ausgerichtet sein.

Bevorzugt erstrecken sich die Gewindestufen über einen Gewindebereich von 10° bis 720°, besonders vorteilhaft über einen Gewindebereich von 90° bis 360°, womit eine ausreichende Länge des den gewindefurchenden Vorgang beim Setzen vorteilhaft beeinflussenden Abschnitts des zumindest einen Gewindeganges für die Erzeugung des Gegengewindes im Untergrund vorgesehen ist. Die angegebenen Winkelbereiche beziehen sich auf den Schaft, wobei ein Bereich von 360° eine Erstreckung der Gewindestufen entlang einer vollen Umdrehung des Befestigungselementes beziehungsweise des gesamten Umfangs des Schafts angibt.

Vorzugsweise sind drei bis zehn, vorteilhaft vier bis acht, Gewindestufen an dem zumindest einen Gewindegang vorgesehen, was einen vorteilhaften Materialabtrag im Untergrund gewährleistet.

Bevorzugt ist die Stirnfläche einer Gewindestufe in einem Winkel von -10° bis +10° zu einer zu dem Gewindegrund Normalen geneigt. Durch die Neigung der Stirnfläche wird das Anschneid- und somit das Abbauverhalten des Gewindes im Untergrund bei jeder Gewindestufe entsprechend beeinflusst. Vorteilhaft sind die Stirnflächen aller Gewindestufen beziehungsweise aller Übergänge von einer Gewindestufe zur nächsten Gewindestufe eines Befestigungselementes im gleichen Winkel bezüglich der Normalen zum Gewindegrund ausgerichtet. Alternativ kann die Neigung der Stirnflächen der einzelnen Gewindestufen an einem Befestigungselement variieren.

Vorzugsweise nimmt die Höhenzunahme der Stirnflächen der Gewindestufen in Bezug auf die benachbarte Gewindestufe beziehungsweise Gewinderücken zum Gewindeanfang hin zu. Bei Beginn des Setzvorgangs des Befestigungselementes wird der Untergrund von der dem Gewindeanfang benachbarten, ersten Stirnfläche stärker gefurcht als von den nachfolgenden Stirnflächen, wobei die letzte Stirnfläche die bereits erstellte Hinterschneidung beziehungsweise das geschaffene Gegengewinde nur noch in einem geringen Mass vergrössert. Dadurch wird der Untergrund beim Setzvorgang weniger stark beansprucht und die Gefahr von unerwünschten Materialabplatzungen zusätzlich reduziert.

Die Erfindung wird nachstehend anhand von Ausführungsbeispielen näher erläutert. Es zeigen:
- Fig. 1: Ein Befestigungselement in Seitenansicht;
- Fig. 2: der sich an den Gewindeanfang anschliessende Abschnitt des in Fig. 1 dargestellten Gewindeganges in einer Teilperspektive;

- Fig. 3: einen Teilschnitt durch den sich an den Gewindeanfang anschliessenden Abschnitt des Gewindeganges gem. Linie III-III in Fig. 1; und
- Fig.4: einen Teilschnitt durch eine Variante des sich an den Gewindeanfang anschliessenden Abschnitts eines Gewindeganges analog Fig. 2.

Grundsätzlich sind in den Figuren gleiche Teile mit den gleichen Bezugszeichen versehen.

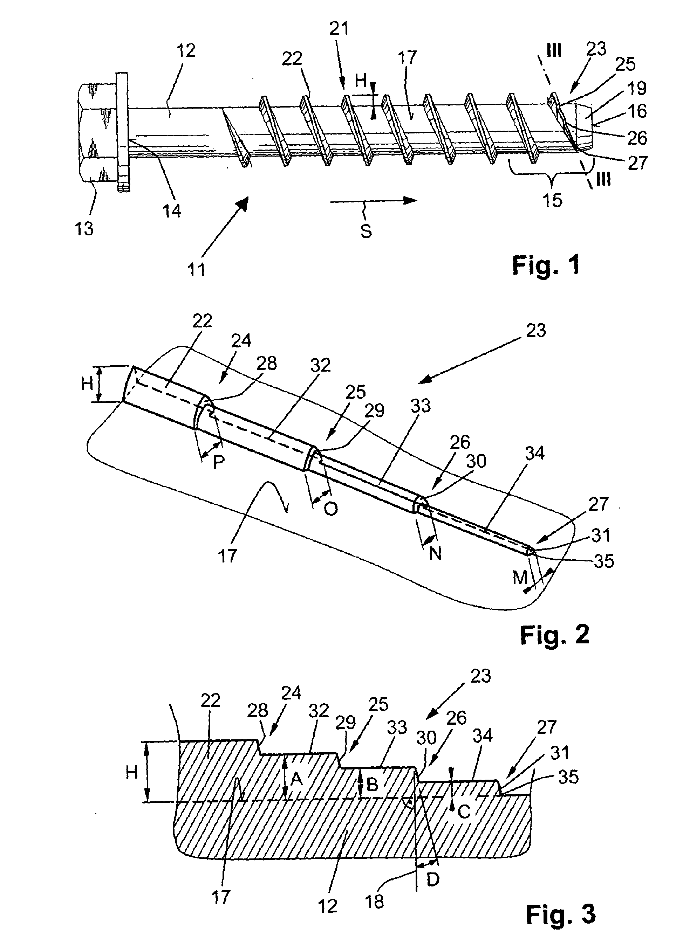

Das in den Figuren 1 bis 3 dargestellte Befestigungselement 11 ist eine Betonschraube für mineralische Untergründe, wie Beton oder Mauerwerk, und wird in ein zuvor erstelltes, hier nicht dargestelltes Bohrloch im Untergrund gesetzt. Das Befestigungselement 11 weist einen Schraubenkopf als Drehangriffsmittel 13 für ein hier nicht dargestelltes Setzwerkzeug und einen ein furchendes Gewinde 21 tragenden Schaft 12 auf, der ein dem Drehangriffsmittel 13 abgewandtes beziehungsweise in Setzrichtung S vorne liegendes freies Ende 16 aufweist. Am freien Ende 16 ist ein sich konisch verjüngender Abschnitt 19 vorgesehen, der das Einführen des Befestigungselementes 11 in das hier nicht dargestellte Bohrloch erleichtert.

Das Gewinde 21 weist einen Gewindegang 22 mit einem Gewindeanfang 35 im Bereich 15 des freien Endes 16 auf. Der an den Gewindeanfang 35 anschliessende Abschnitt 23 des einen Gewindeganges 22 ist mit vier Gewindestufen 24, 25, 26, 27 unterschiedlichen Querschnitts versehen, wobei jede Gewindestufe 24, 25, 26, 27 in Richtung des Gewindeanfangs 35 ausgerichtete und als Schneiden für den Materialabtrag im Untergrund ausgebildete Stirnflächen 28, 29, 30, 31 aufweist. Der Gewindegang 22 wird zum Gewindeanfang hin stufenweise stetig von Gewindestufe zu Gewindestufe im Querschnitt kleiner. Die Gewindestufen 24, 25, 26, 27 verringern über einen Gewindebereich den Gewindegang 22 in Bezug auf den Gewindegrund 17 fortlaufend ausgehend von der vollen Gewindehöhe H des Gewindeganges 22 zum Gewindeanfang 35. Die Gewindestufen 24, 25, 26, 27 nehmen zum Gewindeanfang 35 hin in der Gewindehöhe A, B und C und in die Gewindebreite M, N, O und P ab. Die Gewindestufen 24, 25, 26, 27 weisen jeweils zwischen den Stirnflächen 28, 29, 30, 31 eine konstante Gewindehöhe A, B bzw. C zu dem Gewindegrund 17 auf. Die Gewindebreiten M, N, O am Gewindegrund 17 jeder Gewinderücken 32, 33, 34 und die Gewindebreite P am Gewindegrund 17 des Gewindeganges 22 sind jeweils über den Gewindelauf konstant. Die Stirnflächen 28, 29, 30, 31 nehmen somit nicht nur in der Höhe sondern auch in der Breite zu. Die Gewindestufen 24, 25, 26, 27 erstrecken sich über einen Gewindebereich von etwa 270°. Alle Stirnflächen 28, 29, 30, 31 sind in einem Winkel D von +8° zu einer Normalen 18 zu dem Gewindegrund 17 geneigt. Die Stirnflächen 28, 29, 30, 31 sind in Richtung des Endes 14 des Schafts 12 hin ausgerichtet, an dem das Drehangriffsmittel 13 angeordnet ist, und weisen somit einen negativen Spanwinkel der Schneiden bezogen auf die Einschraubrichtung auf.

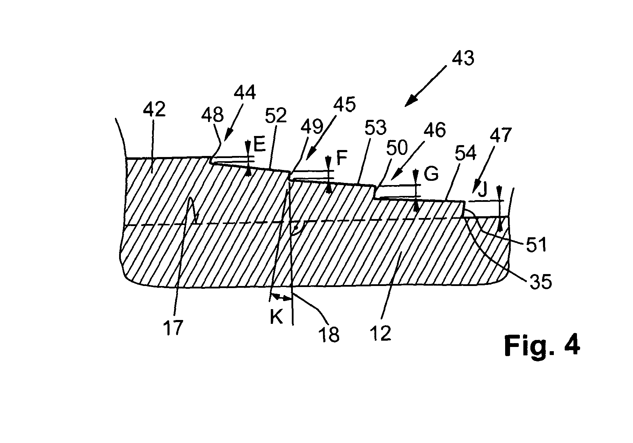

Bei der in der Figur 4 gezeigten Variante des sich an den Gewindeanfang anschliessenden Abschnitts 43 des Gewindeganges 42 mit den Gewindestufen 44, 45, 46 und 47 weisen deren Stirnflächen 48, 49, 50, 51 jeweils unterschiedliche Höhenzunahmen E, F, G, J auf, wobei die Höhenzunahmen E, F, G, J der Stirnflächen 48, 49, 50, 51 in Richtung des freien Endes 16 des Schafts 12 beziehungsweise zum Gewindeanfang 35 hin zunehmen. Die Gewindestufen 44, 45, 46 und 47 sind jeweils zu einer von dem Gewindegrund 17 aufgespannten Ebene geneigt angeordnet und weisen daher jeweils eine variierende Gewindehöhe zu dem Gewindegrund 17 auf. Der Gewinderücken 52, 53, 54 einer Gewindestufe verläuft jeweils vom Gewindeanfang 35 abgewandt zwischen den Stirnflächen 48, 49, 50, 51 ansteigend. Der Gewinderücken 52 verläuft in einem Winkel zu der von dem Gewindegrund 17 aufgespannten Ebene, der steiler als der entsprechende Winkel des benachbart dazu angeordneten Gewinderückens 53 ist. Der Gewinderücken 53 verläuft in einem Winkel zu der von dem Gewindegrund 17 aufgespannten Ebene, der steiler als der entsprechende Winkel des benachbart dazu angeordneten Gewinderückens 54 ist. Die Stirnflächen 48, 49, 50 und 51 der Gewindestufen 44, 45, 46 und 47 verlaufen alle in einem gleichen Winkel K von -5° zu einer Normalen 18 zu dem Gewindegrund 17 geneigt. Die Stirnflächen 48, 49, 50 und 51 sind zum Gewindeanfang hin ausgerichtet und weisen somit einen positiven Spanwinkel der Schneiden bezogen auf die Einschraubrichtung auf.

## Patentansprüche

1. Befestigungselement mit einem Drehangriffsmittel (13) für ein Setzwerkzeug und mit einem ein furchendes Gewinde (21) tragenden Schaft (12), der ein dem Drehangriffsmittel (13) abgewandtes freies Ende (16) aufweist, wobei das Gewinde (21) zumindest einen Gewindegang (22; 42) mit einem Gewindeanfang (35) im Bereich (15) des freien Endes (16) aufweist, wobei
zumindest der sich an den Gewindeanfang (35) anschliessende Abschnitt (23; 43) des zumindest einen Gewindeganges (22; 42) mit Gewindestufen (24, 25, 26, 27; 44, 45, 46, 47) unterschiedlichen Querschnitts versehen ist, die
wenigstens teilweise in Richtung des Gewindeanfangs (35) ausgerichtete und als Schneiden ausgebildete Stirnflächen (28, 29, 30, 31; 48, 49, 50, 51) aufweisen,
und wobei der zumindest eine Gewindegang (22; 42) zum Gewindeanfang (35) hin stufenweise stetig von Gewindestufe (24, 25, 26, 27; 44, 45, 46, 47) zu Gewindestufe (25, 26, 27; 45, 46, 47) im Querschnitt kleiner wird,
**dadurch gekennzeichnet, dass**
der sich an den Gewindeanfang (35) anschliessende Abschnitt (23; 43) des zumindest einen Gewindeganges (22; 42) im Wesentlichen treppenförmig ausgestaltet ist, wobei der zumindest eine Gewindegang (22) zum Gewindeanfang (35) hin stufenweise stetig von Gewindestufe (24, 25, 26, 27) zu Gewindestufe (25, 26, 27) in der Gewindehöhe (A, B, C) abnimmt.

2. Befestigungselement nach Anspruch 1, **dadurch gekennzeichnet, dass** der zumindest eine Gewindegang (22) zum Gewindeanfang (35) hin stufenweise stetig von Gewindestufe (24, 25, 26, 27) zu Gewindestufe (25, 26, 27) in der Gewindebreite (M, N, O, P) am Gewindegrund abnimmt.

3. Befestigungselement nach einem der Ansprüche 1 oder 2, **dadurch gekennzeichnet, dass** die Gewindestufe (24, 25, 26, 27) eine konstante Gewindehöhe (A, B, C) zum Gewindegrund (17) aufweist.

4. Befestigungselement nach einem der Ansprüche 1 bis 3, **dadurch gekennzeichnet, dass** die Gewindestufe (44, 45, 46, 47) eine variierende Gewindehöhe zum Gewindegrund (17) aufweist.

5. Befestigungselement nach einem der Ansprüche 1 bis 4, **dadurch gekennzeichnet, dass** die Gewindestufen (24, 25, 26, 27; 44, 45, 46, 47) sich über einen Gewindebereich von 10° bis 720° erstrecken.

6. Befestigungselement nach Anspruch 5, **dadurch gekennzeichnet, dass** die Gewindestufen (24, 25, 26, 27; 44, 45, 46, 47) sich über einen Gewindebereich von 90° bis 360°erstrecken.

7. Befestigungselement nach einem der Ansprüche 1 bis 6, **dadurch gekennzeichnet, dass** drei bis zehn, vorzugsweise vier bis acht, Gewindestufen (24, 25, 26, 27; 44, 45, 46, 47) an dem zumindest einen Gewindegang (22; 42) vorgesehen sind.

8. Befestigungselement nach einem der Ansprüche 1 bis 7, **dadurch gekennzeichnet, dass** die Stirnfläche (28, 29, 30, 31; 48, 49, 50, 51) einer Gewindestufe (24, 25, 26, 27; 44, 45, 46, 47) in einem Winkel (D; K) von -10° bis +10° zu einer zu dem Gewindegrund (17) Normalen (18) geneigt ist.

9. Befestigungselement nach einem der Ansprüche 1 bis 8, **dadurch gekennzeichnet, dass** die Höhenzunahme (E, F, G, J) der Stirnflächen (48, 49, 50, 51) der Gewindestufen (44, 45, 46, 47) in Bezug auf die benachbarte Gewindestufe (45, 46, 47) zum Gewindeanfang (35) hin zunimmt.

## Claims

1. Fastening element with a means of rotary engagement (13) for a setting tool and with a shaft (12) with a tapping thread (21), which has a free end (16) turned away from the means of rotary engagement (13), in which
the thread (21) has at least one thread pitch (22; 42) with the start of the thread (35) in the area (15) of the free end (16), in which
at least the section (23; 43) of the at least one thread pitch (22; 42) connecting with the start of the thread (35) is provided with thread stages (24, 25, 26, 27; 44, 45, 46, 47) of varying cross section, which
have faces (28, 29, 30, 31; 48, 49, 50, 51) made as cutters and at least partly aligned in the direction of the start of the thread (35),
and in which the at least one thread pitch (22; 42) becomes smaller in cross section from thread stage (24, 25, 26, 27; 44, 45, 46, 47) to thread stage (25, 26, 27; 45, 46, 47) continuously in stages towards the start of the thread (35),
**characterised in that**
the section (23; 43) of the at least one thread pitch (22; 42) connecting with the start of the thread (35) is made essentially stepped, in which
the at least one thread pitch (22) decreases in thread height (A, B, C) from thread stage (24, 25, 26, 27) to thread stage (25, 26, 27) continuously in stages towards the start of the thread (35).

2. Fastening element according to claim 1, **characterised in that** the at least one thread pitch (22) decreases in thread width (M, N, O, P) at the base of the thread from thread stage (24, 25, 26, 27) to thread stage (25, 26, 27) continuously in stages towards the start of the thread (35).

3. Fastening element according to one of claims 1 or 2, **characterised in that** the thread stage (24, 25, 26, 27) has a constant thread height (A, B, C) at the base of the thread (17).

4. Fastening element according to one of claims 1 to 3, **characterised in that** the thread stage (44, 45, 46, 47) has a varying thread height at the base of the thread (17).

5. Fastening element according to one of claims 1 to 4, **characterised in that** the thread stages (24, 25, 26, 27; 44, 45, 46, 47) extend over a thread range of 10° to 720°.

6. Fastening element according to claim 5, **characterised in that** the thread stages (24, 25, 26, 27; 44, 45, 46, 47) extend over a thread range of 90° to 360°.

7. Fastening element according to one of claims 1 to 6, **characterised in that** three to ten, preferably four to eight, thread stages (24, 25, 26, 27; 44, 45, 46, 47) are provided on the at least one thread pitch (22; 42).

8. Fastening element according to one of claims 1 to 7, **characterised in that** the face (28, 29, 30, 31; 48, 49, 50, 51) of a thread stage (24, 25, 26, 27; 44, 45, 46, 47) is inclined at an angle (D; K) of - 10° to + 10° to one of the normal lines (18) at the base of the thread (17).

9. Fastening element according to one of claims 1 to 8, **characterised in that** the increase in height (E, F, G, J) of the face (48, 49, 50, 51) of the thread stages (44, 45, 46, 47) increases with reference to the adjacent thread stage (45, 46, 47) towards the start of the thread (35).

## Revendications

1. Elément de fixation comportant des moyens de transmission de rotation (13) pour un outil de pose et une tige (12) portant un filetage taraudeur (21), laquelle tige comporte une extrémité libre (16) opposée aux moyens de transmission de rotation (13),
dans lequel le filetage (21) comporte au moins un filet de vis (22 ; 42) avec un début de filet (35) dans la zone (15) de l'extrémité libre (16),
dans lequel au moins la partie (23 ; 43) qui suit le début de filet (35) du au moins un filet de vis (22 ; 42) est munie de gradins filetés (24, 25, 26, 27 ; 44, 45, 46, 47) de différentes sections, lesquels gradins filetés comportent des surfaces d'extrémité (28, 29, 30, 31 ; 48, 49, 50, 51) formées comme des bords de coupe et orientées au moins partiellement en direction du début de filet (35),
et dans lequel la section transversale du au moins un filet de vis (22 ; 42) diminue progressivement de manière constante vers le début de filet (35) à partir du gradin fileté (24, 25, 26, 27 ; 44, 45, 46, 47) jusqu'au gradin fileté (25, 26, 27 ; 45, 46, 47),
**caractérisé en ce que**
la partie (23 ; 43) qui suit le début de filet (35) du au moins un filet de vis (22 ; 42) est sensiblement configurée en forme d'escalier,
dans lequel la hauteur de filet (A, B, C) du au moins un filet de vis (22) diminue progressivement de manière constante vers le début de filet (35) à partir du gradin fileté (24, 25, 26, 27) jusqu'au gradin fileté (25, 26, 27).

2. Elément de fixation selon la revendication 1, **caractérisé en ce que** la largeur de filet (M, N, O**,** P) sur le fond de filet du au moins un filet de vis (22) diminue progressivement de manière constante vers le début de filet (35) à partir du gradin fileté (24, 25, 26, 27) jusqu'au gradin fileté (25, 26, 27).

3. Elément de fixation selon l'une quelconque des revendications 1 ou 2, **caractérisé en ce que** le gradin fileté (24, 25, 26, 27) a une hauteur de filet (A, B, C) constante par rapport au fond de filet (17).

4. Elément de fixation selon l'une quelconque des revendications 1 à 3, **caractérisé en ce que** le gradin fileté (44, 45, 46, 47) a une hauteur de filet variable par rapport au fond de filet (17).

5. Elément de fixation selon l'une quelconque des revendications 1 à 4, **caractérisé en ce que** les gradins filetés (24, 25, 26, 27 ; 44, 45, 46, 47) s'étendent sur une zone filetée de 10 ° à 720 °.

6. Elément de fixation selon la revendication 5, **caractérisé en ce que** les gradins filetés (24, 25, 26, 27 ; 44, 45, 46, 47) s'étendent sur une zone filetée de 90 ° à 360 °.

7. Elément de fixation selon l'une quelconque des revendications 1 à 6, **caractérisé en ce que** de trois à dix, de préférence de quatre à huit, gradins filetés (24, 25, 26, 27 ; 44, 45, 46, 47) sont prévus sur le au moins un filet de vis (22 ; 42).

8. Elément de fixation selon l'une quelconque des revendications 1 à 7, **caractérisé en ce que** la surface d'extrémité (28, 29, 30, 31 ; 48, 49, 50, 51) d'un gradin fileté (24, 25, 26, 27 ; 44, 45, 46, 47) est inclinée à un angle (D ; K) de - 10 ° à + 10 ° par rapport à une normale (18) au fond de filet (17).

9. Elément de fixation selon l'une quelconque des revendications 1 à 8, **caractérisé en ce que** l'augmentation de hauteur (E, F, G, J) des surfaces d'extrémité (48, 49, 50, 51) des gradins filetés (44, 45, 46, 47) augmente vers le début de filet (35) par rapport au gradin fileté voisin (45, 46, 47).
